# EUROPÄISCHE PATENTSCHRIFT

(11) **EP 4 089 006 B1**
(45) Veröffentlichungstag und Bekanntmachung des Hinweises auf die Patenterteilung: **14.08.2024**
(21) Anmeldenummer: 22173235.7
(22) Anmeldetag: 13.05.2022
(51) Int. Cl.: B64C 1/00, B64C 1/06, B64C 1/12, B64D 9/00, H05K 5/02

(54) **FRACHTLADERAUM EINES FLUGZEUGS MIT VERKLEIDUNGSELEMENTEN UND MINDESTENS EINEM GEHÄUSEELEMENT**
FREIGHT COMPARTMENT OF AN AIRCRAFT WITH COVERING ELEMENTS AND AT LEAST ONE HOUSING ELEMENT
COMPARTIMENT DE CHARGEMENT DE FRET D'UN AÉRONEF POURVU D'ÉLÉMENTS DE REVÊTEMENT ET D'AU MOINS UN ÉLÉMENT DE LOGEMENT

(30) Priorität: 14.05.2021 DE 102021112580
(43) Veröffentlichungstag der Anmeldung: 16.11.2022
(73) Patentinhaber: Telair International GmbH, 83714 Miesbach (DE)
(72) Erfinder: Urch, Matthias, 85658 Egmating (DE); Weise, Torsten, 83727 Schliersee (DE)
(74) Vertreter: Meissner Bolte Partnerschaft mbB

(56) Entgegenhaltungen:
- EP-A1- 0 614 258
- EP-A1- 3 222 513
- WO-A1-2014/135912
- FR-A1- 3 085 089

## Beschreibung

Die Erfindung betrifft einen Frachtladeraum eines Flugzeugs mit Verkleidungselementen und mindestens einem Gehäuseelement zur Beherbergung von Elektronikkomponenten und/oder Kabeln sowie ein Verfahren zur Montage von Gehäuseelementen in einem Frachtladeraum eines Flugzeugs.

Frachtladeräume von Flugzeugen verfügen üblicherweise über Frachtladesysteme mit Rollenbahnen, die von Rollenantriebseinheiten angetrieben werden. Auf diese Weise wird das Bewegen von Frachtstücken, die meist auf Paletten oder in Containern verladen sind, auf den Rollenbahnen während des Be- und Entladevorgangs erheblich vereinfacht. Zur Steuerung der Rollenantriebseinheiten sind in einem Frachtladeraum meist mehrere gleichartige Bedienteile vorgesehen, mit denen das Verladepersonal die Frachtstücke auf den Rollenbahnen bewegen kann. Hierfür müssen die Bedienteile über elektrische Leitungen mit den Rollenantriebseinheiten verbunden sein. Typischerweise sind die Bedienteile an der seitlichen Innenverkleidung des Flugzeugs in geeigneter Höhe über dem Frachtraumboden platziert, sodass das Ladepersonal diese bequem im Stehen bedienen kann.

Eine herkömmliche Installation eines solchen Frachtladeraums sieht vor, dass die Bedienteile in die Verkleidungselemente des Flugzeugs eingelassen sind. Dies setzt voraus, dass geeignete Ausschnitte in den Verkleidungselementen vorgesehen sind. Die Kabel für die Zuleitung der Bedienteile werden häufig unterhalb der Verkleidungselemente geführt.

Eine derartige Installation bringt in der praktischen Umsetzung verschiedene Nachteile mit sich. Durch den Ausschnitt, der zur Montage eines Bedienteils in ein Verkleidungselement erfolgt, wird eine Brandschutzbarriere zerstört, die auf Grund behördlicher Vorgaben an die Brandsicherheit wiederhergestellt werden muss. Dies geschieht, indem in die Ausschnitte Wannen aus feuerfestem Material, beispielsweise Glasfaser, eingebracht werden. In eine solche Wanne kann dann ein Bedienteil montiert werden, wobei wiederum eine Frontplatte aus durchbrandsicherem Material vorhanden sein muss.

Darüber hinaus gestaltet sich die Verlegung der Leitungen unterhalb der Verkleidungselemente in der Praxis als äußerst aufwändig. Die Leitungen müssen, unterhalb der Verkleidungselemente, an den Strukturelementen des Flugzeugs befestigt werden, wo in der Regel bereits diverse weitere Kabelsysteme vorhanden sein können. Um behördlich vorgeschriebene Separierungsregeln zu weiteren Kabelsystemen einzuhalten, müssen Abstandshalter und Winkel verbaut werden.

Die beschriebene Installation eines solchen Frachtladeraums, beispielsweise im Zuge einer Umrüstung, ist also aufwändig in der Durchführung und setzt zudem spezielle Materialien mit meist hohen Anschaffungspreisen voraus. Auch die spätere Wartung eines solchen Systems gestaltet sich schwierig, da zur Inspektion der Kabel die Verkleidungselemente demontiert werden müssen.

Aus der FR 3 085 089 A1 ist eine Vorrichtung zur Montage an einem Strukturelement eines Flugzeugs bekannt. Die Vorrichtung weist einen Kanal in Form eines rohrförmigen Hohlkörpers auf, dessen Innenvolumen einen Aufnahmebereich für mindestens ein Bündel von Kabeln oder andere fadenförmige Elemente bildet. Der Kanal ist vorzugsweise flexibel und weist einen Schlitz entlang seiner Längsachse auf. Die Vorrichtung weist ferner mindestens eine Befestigungslasche auf, die starr mit dem Kanal verbunden ist.

Ausgehend von der FR 3 085 089 A1 ist es Aufgabe der Erfindung, einen verbesserten Frachtladeraum anzubieten. Insbesondere soll die Installation und Wartung eines solchen Frachtladeraums möglichst einfach sein. Darüber hinaus sollen die verwendeten Komponenten in einfacher und kostengünstiger Weise herstellbar sein.

Diese Aufgabe wird durch einen Frachtladeraum nach Anspruch 1 gelöst.

Insbesondere wird die Aufgabe durch einen Frachtladeraum mit Verkleidungselementen gelöst, die an Trägern, insbesondere Strukturelementen, des Flugzeugs befestigt sind, wobei die Verkleidungselemente zur Befestigung eine Vielzahl von Verkleidungsbohrungen mit (vordefinierten) Verkleidungsbohrabständen aufweisen. Weiterhin umfasst der Frachtladeraum mindestens ein Gehäuseelement zur Beherbergung von Elektronikkomponenten und/oder Kabeln, wobei das Gehäuseelement mindestens ein Paar von Gehäusebohrungen zur Aufnahme von Befestigungsvorrichtungen aufweist, wobei die Gehäusebohrungen einen zu mindestens einem Paar von Verkleidungsbohrabständen korrespondierenden Gehäusebohrabstand haben.

Unter einer Bohrung, insbesondere Gehäusebohrung oder Verkleidungsbohrung, wird im Kontext dieser Erfindung eine beliebige Öffnung zur Aufnahme von Befestigungsvorrichtungen verstanden, unabhängig davon, auf welche Art die Öffnung hergestellt wurde.

Ein Punkt der Erfindung besteht somit darin, dass der Frachtladeraum Gehäuseelemente aufweist, in denen Elektronikkomponenten und/oder Kabel beherbergt sind. Dies ermöglicht insbesondere, Kabel in dedizierten Gehäuseelementen verlaufen zu lassen, wodurch sie von anderen Kabelsystemen separiert werden. Die erfindungsgemäßen Gehäusebohrungen erlauben zudem eine Befestigung der Gehäuseelemente an den Verkleidungselementen, da beide Komponenten über korrespondierende Bohrabstände verfügen.

In einer Ausführungsform wird ein Gehäuseelement auf einem der Verkleidungselemente montiert. Eine solche Installationsart ist in der Gebäudetechnik unter dem Begriff der Aufputzmontage bekannt. Im Frachtladeraum eines Flugzeugs werden auf diese Weise verschiedene der oben genannten Probleme einer herkömmlichen Installationsart gelöst: So sind keine Ausschnitte in den Verkleidungselementen mehr erforderlich, da die Gehäuseelemente oberhalb/außerhalb der Verkleidungselemente angebracht sind. Neben einer einfacheren Installation bietet dies auch den Vorteil, dass die Brandschutzeigenschaften der Verkleidungselemente erhalten bleiben. Darüber hinaus werden Separierungsregeln zu anderen, hinter der Verkleidung verlaufenden, Kabelsystemen eingehalten, da die Verkleidungselemente als Separierung dienen.

Die Gehäuseelemente sind vorzugsweise wahlweise als Kabelkanal zur Führung eines Kabels, als Verbindungselement zur Verbindung mehrerer Kabelkanäle oder als Gehäusekasten für eine elektrische Komponente und/oder Anzeigeeinrichtung, ausgebildet. Die elektrische Komponente kann ein Schalter, beispielsweise eine Schaltwippe sein.

Erfindungsgemäß ist es möglich, nur Gehäuseelemente einer einzigen Form, beispielsweise in Form von Kabelkanälen, einzusetzen. Bevorzugt wird jedoch eine Ausführungsform, bei der alle drei Arten von Gehäuseelementen in Kombination eingesetzt werden. Auf diese Weise kann ein komplexes System aus Gehäuseelementen unter Berücksichtigung der räumlichen Anforderungen des Flugzeugs realisiert werden.

Ein Kabelkanal weist in einer Ausführungsform einen symmetrischen Querschnitt, insbesondere halbellipsenförmig, und/oder mindestens ein Mittelstegsegment auf. Das Mittelstegsegment kann so angeordnet sein, dass es einen Innenbereich des Kabelkanals (in Längsrichtung) in mindestens zwei Innenkanäle teilt. Ein solcher Aufbau verleiht dem Hohlraum des Kabelkanals zusätzliche Struktur, die beim Anordnen der Kabel vorteilhaft genutzt werden kann.

In einer bevorzugten Ausführungsform enthält der Frachtladeraum mindestens ein Frachtladesystem mit mindestens einem Kabel und mindestens einem Gehäuseelement in Form eines Kabelkanals, wobei der Kabelkanal mindestens ein Kabel des Frachtladesystems beherbergt. Bei dem Kabel kann es sich beispielsweise um ein Steuerkabel von Rollenantriebseinheiten handeln. Weiterhin können diverse andere Aktuatoren zusätzlich oder anstelle der Rollenantriebseinheiten vorgesehen sein. Zusätzlich kann der Frachtraum mit Sensoren, z.B. Überdeckungssensoren zur Positionsbestimmung der Fracht und/oder Brandsensoren, ausgestattet sein. Erfindungsgemäß können die notwendigen Kabel und/oder Komponenten in den erfindungsgemäßen Gehäuseelementen beherbergt werden.

Verbindungselemente sind vorzugsweise zur Verbindung von zwei oder drei oder vier Kabelkanälen ausgebildet. Dies ermöglicht, eine entsprechende Anzahl von Kabelkanälen an Kreuzungspunkten zusammenzuschließen, sodass insgesamt ein verzweigtes Kabelkanalsystem entstehen kann.

In einer Ausführungsform weist ein Verbindungselement ein Führungselement, insbesondere einen Führungsring, auf. Dieser Aufbau ermöglicht eine saubere Führung eines Kabels im Inneren des Verbindungselements, insbesondere entlang von gebogenen Abschnitten.

Bevorzugt sind die Gehäuseelemente aus schwer entflammbarem Material, insbesondere Polyamid 12, gefertigt. Dies erlaubt, behördliche Vorgaben an die Durchbrandsicherheit einzuhalten. Polyamid 12 beispielsweise erfüllt den Brandklassifikationstest UL 94 HB für Kunststoffe.

Die Gehäuseelemente sind in einer Ausführungsform in einem Spritzgussverfahren gefertigt, was eine kostengünstige Herstellung erlaubt. Alternativ kann ein Gehäuseelement zur Montage am oder auf einem Boden des Frachtdecks ausgebildet sein. In diesem Fall ist das Rohmaterial vorzugsweise eine Metalllegierung, insbesondere eine Aluminiumlegierung, aus der vorzugsweise in einem Strangpressverfahren das Gehäuseelement geformt wird. Eine solche Herstellungsform erhöht die Stabilität des Gehäuseelements.

Die vorliegende Erfindung betrifft ferner ein Gehäuseelement zur Beherbergung von Elektronikkomponenten und/oder Kabeln. Hierbei weist das Gehäuseelement mindestens zwei Gehäusebohrungen zur Befestigung auf einem Verkleidungselement auf. Die Gehäusebohrungen haben einen Gehäusebohrabstand, der zu mindestens einem Paar von Verkleidungsbohrabständen korrespondiert.

Weiterhin wird die eingangs genannte Aufgabe durch ein Flugzeug nach Anspruch 9 gelöst. Das Flugzeug weist einen Frachtladeraum wie vorstehend beschrieben auf.

Es ergeben sich ähnliche Vorteile, wie diese bereits in Verbindung mit dem erfindungsgemäßen Frachtraum beschrieben wurden.

Weiterhin wird die Aufgabe durch ein Verfahren zur Montage von Gehäuseelementen in einem Frachtladeraum eines Flugzeugs, vorzugsweise im Zuge einer Umrüstung eines Passagierraums in den Frachtladeraum, gelöst, wobei das Verfahren die folgenden Schritte umfasst:
- Entfernen von Befestigungsvorrichtungen, mit denen Verkleidungselemente auf Strukturelementen fixiert sind, aus Befestigungsaufnahmen der Strukturelemente;
- Montage der Gehäuseelemente mit vorkonfektionierten Gehäusebohrungen auf den Verkleidungselementen unter Ausnutzung der Befestigungsaufnahmen,
wobei Befestigungsvorrichtungen in die Gehäusebohrungen eingebracht und in den Befestigungsaufnahmen befestigt werden, und
- Anordnen von Kabeln, vorzugsweise mit Steckverbindungen ausgestattet, in Hohlräumen von mindestens einigen Gehäuseelementen.

Ein Aspekt des Verfahrens besteht darin, dass zur Befestigung der Gehäuseelemente Befestigungsvorrichtungen, beispielsweise Schrauben, durch die Gehäusebohrungen und die bestehenden Verkleidungsbohrungen in die Befestigungsaufnahmen, beispielsweise Schraublöcher, der Strukturelemente eingebracht werden. Auf diese Weise können die Gehäuseelemente auf den Verkleidungselementen montiert werden, ohne dass die Oberfläche der Verkleidungselemente bearbeitet werden muss. Insbesondere bleibt so die Durchbrandsicherheit der Verkleidungselemente erhalten.

Darüber hinaus bewirkt die obige Installationsart, dass die Verkleidungselemente von den Gehäuseelementen an den Strukturelementen gehalten werden. Vor allem bei großen, aus einer Metalllegierung ausgebildeten Kabelkanälen kann dies für eine besonders stabile Befestigung der Verkleidungselemente an den Strukturelementen sorgen.

Der Aufwand für das Anordnen von Kabeln gemäß dem beschriebenen Verfahren ist hierbei weitaus geringer, verglichen mit dem Anordnen von Kabeln hinter den Verkleidungselementen. Insbesondere kann dieser Schritt außerhalb des Flugzeugs durchgeführt werden. Die Verwendung von Steckverbindungen erlaubt, dass Kabel und/oder elektrische Komponenten abschnittsweise in den Hohlräumen der Gehäuseelemente angeordnet werden können und bei Bedarf erst im Flugzeug zu einem System verbunden werden.

In einer Ausführungsform wird ein Verfahren, das den Schritt des Fertigens mindestens eines Gehäuseelements mit Gehäusebohrungen, das einen Gehäusebohrabstand hat, der im Wesentlichen einem Befestigungsaufnahmebohrabstand entspricht, umfasst. Auf diese Weise können später Gehäuseelemente auf Strukturelementen befestigt werden, ohne dass entsprechende Gehäusebohrungen während der Montage erzeugt werden müssen.

Besonders bevorzugt ist eine Ausführungsform, bei der die Fertigung mindestens einen der folgenden Schritte umfasst: ein Strangpressen, ein Spritzgießen, insbesondere eines Polyamids 12, einen 3D-Druck, ein Formlaminieren eines glasfaserverstärkten Kunststoffs, insbesondere eines Glasfaser-Epoxidharzes. Insbesondere das Spritzgießen erlaubt, Gehäuseelemente direkt mit Gehäusebohrungen zu versehen, ohne dass ein weiterer Fertigungsschritt hierfür erforderlich ist.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
Fig. 1 einen Frachtladeraum mit Verkleidungselementen und Gehäuseelementen im montierten Zustand;
Fig. 2 auf Verkleidungselementen befestigte Gehäuseelemente (Explosionszeichnung);
Fig. 3 ein Verbindungselement für drei Kabelkanäle;
Fig. 4 ein Verbindungselement für zwei Kabelkanäle;
Fig. 5 ein Gehäuseelement für eine Schaltwippe;
Fig. 6 ein Gehäuseelement für eine Schaltwippe gemäß eines alternativen Ausführungsbeispiels.

In der nachfolgenden Beschreibung werden für gleiche und gleich wirkende Teile dieselben Bezugsziffern verwendet.

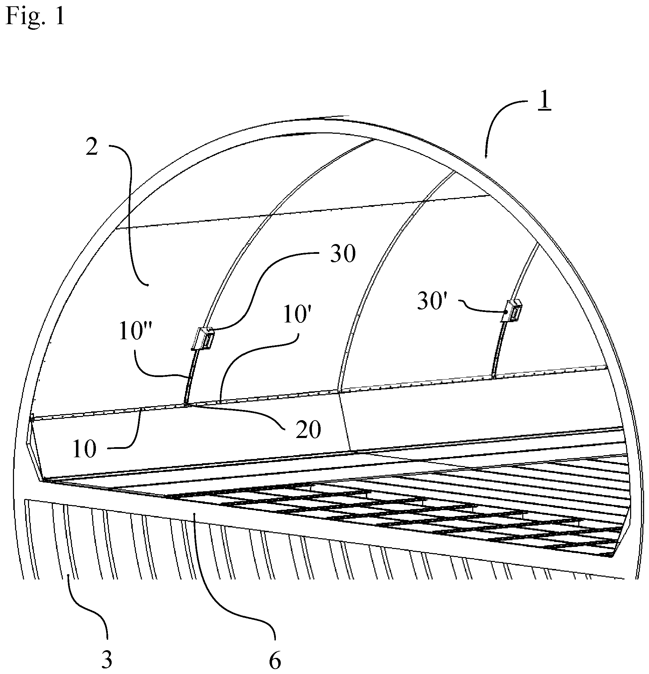

Figur 1 zeigt das Oberdeck ("main deck") eines Frachtflugzeugs mit einem Frachtladeraum 1. Der Frachtladeraum 1 ist mit mehreren rechteckigen, gewölbten Paneelen 2 verkleidet, die an Spanten 3 des Frachtflugzeugs angebracht sind.

Auf den Paneelen 2 sind verschiedene erfindungsgemäße Gehäuseelemente in Form von Kabelkanälen 10, 10', 10" sowie ein T-Stück 20 als Verbindungselement für die Kabelkanäle 10, 10', 10" und zwei Gehäusekästen 30, 30' montiert.

In dem Ausführungsbeispiel dienen die Gehäusekästen 30, 30' zur Aufnahme von Schaltwippen 31, mittels denen sich beispielsweise Rollenantriebseinheiten (nicht gezeigt) steuern lassen. Solche Rollenantriebseinheiten sind üblicherweise am Frachtraumboden 6 montiert und dienen dazu, Fracht in Längsrichtung des Flugzeugs zu fördern. Übliche Rollenantriebseinheiten unterstützen zwei Förderrichtungen.

Damit die Schaltwippen 31 vom Ladepersonal bequem erreicht werden können, sind die Gehäusekästen 30, 30' in Griffhöhe (ca. 1,2 Meter) über dem Frachtraumboden 6 an den Paneelen 2 montiert.

Es sind mehrere Kabelkanäle, insbesondere der erste Kabelkanal 10 sowie der zweite Kabelkanal 10' so hintereinander angeordnet, dass sie eine sich im Wesentlichen über die gesamte Länge des Frachtladeraums 1 erstreckende Kabelführung bilden, die auf den Paneelen 2 verläuft (ca. 0,5 Meter vom Frachtraumboden entfernt). Auf Höhe des ersten Gehäusekastens 30 zweigt senkrecht der dritte Kabelkanal 10" von der sich in Längsrichtung erstreckenden Kabelführung ab und führt nach oben hin zum ersten Gehäusekasten 30. Der erste Gehäusekasten 30 umschließt den dritten Kabelkanal 10" derart, dass die in dem dritten Kabelkanal 10" verlaufenden Kabel vollständig abgedeckt sind.

Bei den Kabeln kann es sich um Kabel für einen Bus handeln, so dass die mittels der Schaltwippen 31 erfassten Steuerbefehle an die Rollenantriebseinheiten und/oder einen Steuercomputer (nicht gezeigt) kommuniziert werden können. Solche Kabel können beispielsweise in Form von Rundkabeln mit einer Dicke von 6 bis 12mm vorliegen.

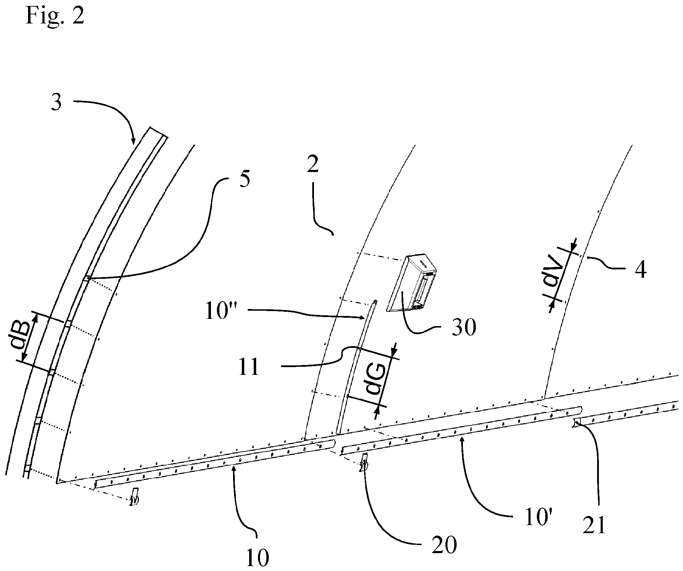

An der Kreuzungsstelle der Kabelkanäle 10, 10', 10" ist das T-Stück 20 eingesetzt, um die Kabelkanäle 10, 10', 10" miteinander zu verbinden. Figur 2 zeigt die Befestigung der Kabelkanäle 10, 10', 10", des T-Stücks 20, eines Verbindungselements 21 und des ersten Gehäusekastens 30 an den Paneelen 2 im Detail.

Es ist üblich, dass die Paneele 2 eine Vielzahl von Verkleidungsbohrungen 4 in regelmäßigem Verkleidungsbohrabstand dV aufweisen, in denen Befestigungsschrauben angeordnet sind, die die Paneele 2 an den Spanten 3 halten. Die erfindungsgemäßen Gehäuseelemente, insbesondere die Kabelkanäle 10, 10', 10" sind unter Ausnutzung dieser Verkleidungsbohrungen 4 montiert.

Hierzu verfügen die Kabelkanäle 10, 10', 10" über mehrere Gehäusebohrungen 11, die jeweils in einem Gehäusebohrabstand dG vorgesehen sind. In dem Ausführungsbeispiel stimmt der Gehäusebohrabstand dG mit dem Verkleidungsbohrabstand dV überein, es gilt dG=dV. Die Kabelkanäle 10, 10', 10" sind so angeordnet, dass die Gehäusebohrungen 11 einen Teil der Verkleidungsbohrungen 4 exakt überdecken. In dem Ausführungsbeispiel gemäß Figur 2 sind die Kabelkanäle 10, 10', 10" jeweils durch eine Vielzahl von Befestigungsschrauben an den Paneelen 2 gehalten.

Der erste Gehäusekasten 30 verfügt über zwei Gehäusebohrungen 11, wobei eine am oberen Ende und eine am unteren Ende des ersten Gehäusekastens 30 angeordnet ist. Der Gehäusebohrabstand dG zwischen den Gehäusebohrungen 11 entspricht auch hier dem Verkleidungsbohrabstand dV. Darüber hinaus ist der erste Gehäusekasten 30 so positioniert, dass seine beiden Gehäusebohrungen 11 exakt über einem Paar von Verkleidungsbohrungen 4 der Paneele 2 liegen. Zur Befestigung des ersten Gehäusekastens 30 sind daher zwei Schrauben vorgesehen, die durch die Gehäusebohrungen 11 und Verkleidungsbohrungen 4 führen.

Zur Montage des T-Stücks 20 sowie des Verbindungselements 21 an den Paneelen 2 ist jeweils eine einzelne Gehäusebohrung 11 vorgesehen. Die Kabelkanäle 10, 10', 10" sind genau so bemessen, dass das jeweilige T-Stück 20 oberhalb der Verkleidungsbohrung 4 zu liegen kommt und entsprechend verschraubt werden kann.

In einem alternativen Ausführungsbeispiel ist der Gehäusebohrabstand dG zwischen zwei Gehäusebohrungen 11 eines Gehäuseelements, beispielsweise des dritten Kabelkanals 10", nicht gleich dem Verkleidungsbohrabstand dV, sondern um ein Vielfaches größer. Es gilt also dG=n·dV, wobei n eine natürliche Zahl ist. Dies ist insbesondere dann vorteilhaft, wenn die Paneele 2 eine Vielzahl von Verkleidungsbohrungen 4 in geringem Abstand aufweisen, zur Befestigung des dritten Kabelkanals 10" aber wenige Befestigungsmittel in größerem Abstand zueinander ausreichen. Der Fall n=3 entspricht also beispielsweise dem Fall, bei dem jede dritte Verkleidungsbohrung 4 eines Paneels 2 mit einer Gehäusebohrung 11 des zweiten Kabelkanals 10" zusammenfällt.

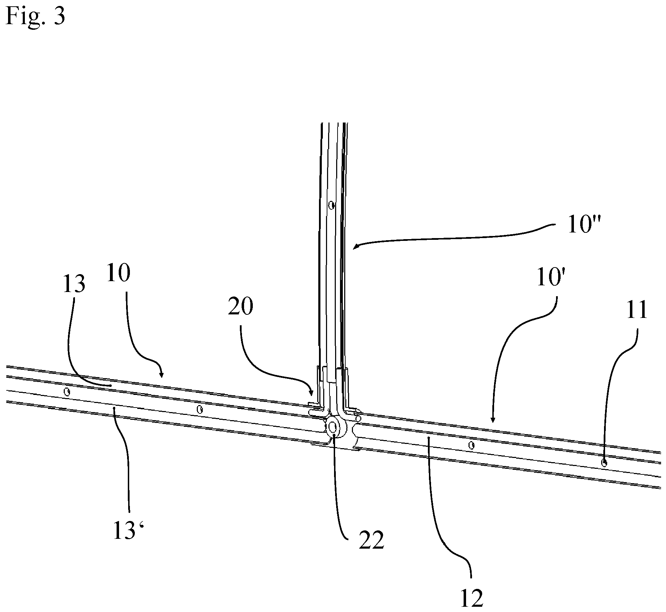

In Figur 3 ist eine Rückansicht der drei Kabelkanäle 10, 10', 10" dargestellt, die durch das T-Stück 20 verbunden sind.

Die Kabelkanäle 10, 10', 10" besitzen ein offenes, dünnwandiges Profil (z.B. Wandstärke = 2 oder 3 mm) mit näherungsweise halbkreisförmigem Querschnitt (beispielweise mit einem Durchmesser von 8 bis 15mm).

Darüber hinaus weisen die Kabelkanäle 10, 10', 10" durchgehende Mittelstege 12 auf. Diese sind so angeordnet, dass sich in den Hohlräumen der Kabelkanäle 10, 10', 10" jeweils zwei Innenkanäle 13, 13' bilden, die von den Mittelstegen 12 separiert werden.

Bei dem Anordnen von Kabeln in den Hohlräumen der Kabelkanäle 10, 10', 10" kann diese Struktur dazu genutzt werden, unterschiedliche Kabel zu separieren. Beispielsweise kann von zwei Kabeln oder Kabelbündeln, von denen eines zur Zuleitung der Schaltwippe 31 und das andere zur Weitergabe eines Signals dient, je eines in die Innenkanäle 13, 13' des dritten Kabelkanals 10" gelegt werden.

Die Gehäusebohrungen 11 der Kabelkanäle 10, 10', 10" sind so angeordnet, dass diese den Mittelsteg 12 durchdringen. Die Mittelstege 12 sorgen also neben der Trennung der Kabel dafür, dass die Kabelkanäle 10, 10', 10" beim Anziehen der Schrauben nicht verformt werden.

In dem T-Stück 20 ist ein Führungsring 22 vorgesehen, der zur Führung einer Befestigungsschraube dient. Die Kabel, die entlang der gebogenen Abschnitte zwischen Kabelkanal 10 und 10" bzw. 10' und 10" verlaufen, können tangential um den Führungsring 22 herum angeordnet werden.

Die in Figur 3 abgebildeten Mittelstege 12 weisen einen im Wesentlichen rechteckigen Querschnitt auf. Alternativ sind geometrisch kompliziertere Querschnitte denkbar, sodass mehr als zwei Innenkanäle 13, 13' entstehen, beispielsweise drei oder vier. Auf diese Weise kann die Kabelführung noch besser strukturiert werden, was die Wartungsarbeiten erheblich erleichtern kann.

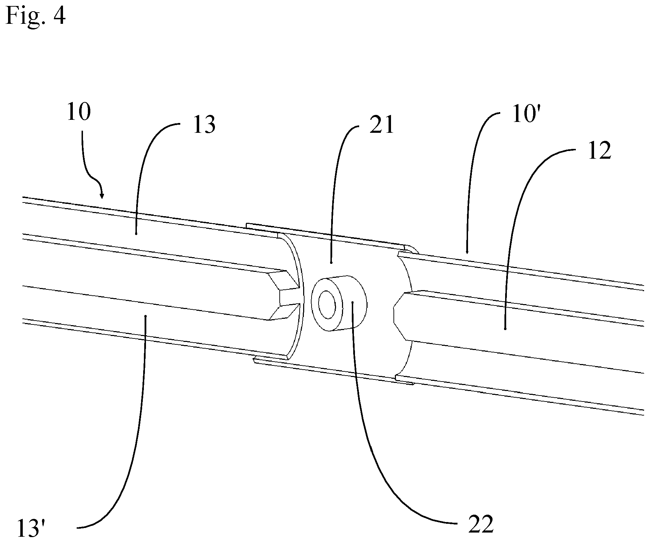

Figur 4 zeigt ein Ausführungsbeispiel, bei dem, anders als bei dem Ausführungsbeispiel gemäß Figur 3, am Übergang zwischen erstem Kabelkanal 10 und zweitem Kabelkanal 10' keine Abzweigung vorgesehen ist. Statt des T-Stücks 20 gemäß Figur 3 ist an der Schnittstelle das Verbindungselement 21 platziert. In dem Verbindungselement 21 ist ebenfalls ein Führungsring 22 zur Führung einer Befestigungsschraube verbaut.

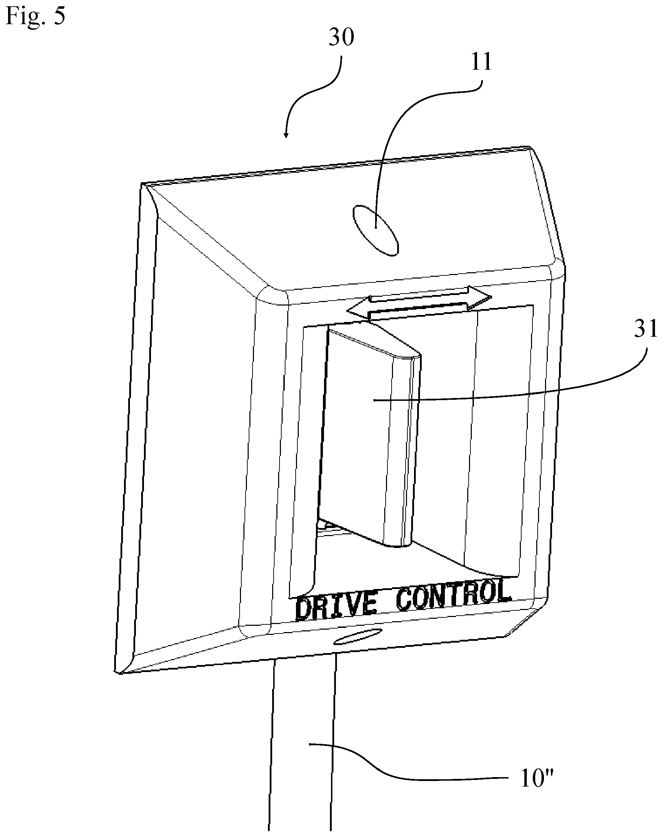

Figur 5 zeigt eine Detailansicht des ersten Gehäusekastens 30, in dem die Schaltwippe 31 zur Steuerung einer Rollenantriebseinheit untergebracht ist. Die zur Schaltwippe 31 führenden Anschlusskabel sind in dem dritten Kabelkanal 10" untergebracht, der senkrecht nach unten von dem ersten Gehäusekasten 30 wegführt. Auf der Oberfläche des Gehäusekastens 30 sind Beschriftungen zur Bedienung der Schaltwippe 31 angebracht. Der erste Gehäusekasten 30 weist an seinem oberen und unteren Ende jeweils eine Gehäusebohrung 11 auf und ist so montiert, wie dies bereits beschrieben wurde.

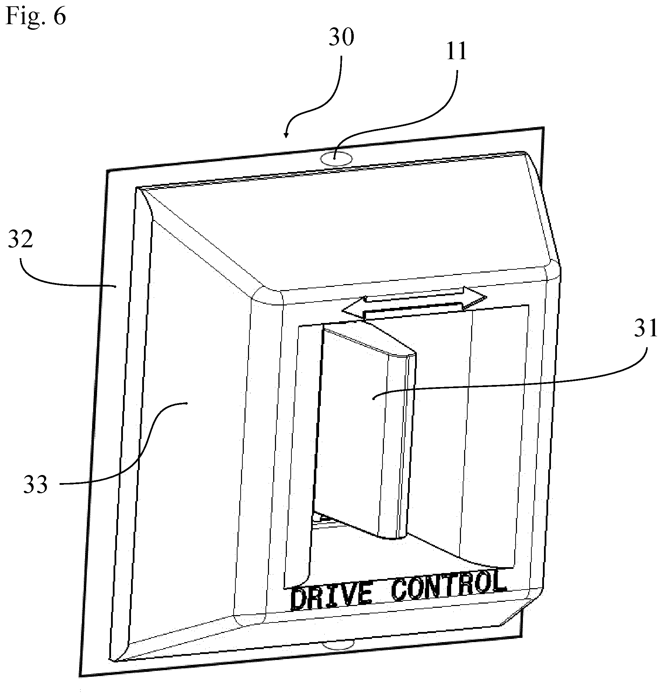

Figur 6 zeigt ein anderes Ausführungsbeispiel des ersten Gehäusekastens 30. Hier umfasst der erste Gehäusekasten 30 eine Befestigungsplatte 32 und einen Gehäuserahmen 33. Die Gehäusebohrungen 11 befinden sich hierbei auf der Befestigungsplatte 32. Der Gehäuserahmen 33 sitzt auf der Befestigungsplatte 32 auf und ist dort beispielsweise aufgeklemmt bzw. aufgesteckt.

Grundsätzlich ist ein zweiteiliger Aufbau, wie in diesem Ausführungsbeispiel mittels Befestigungsplatte 32 und Gehäuserahmen 33, auch für andere erfindungsgemäße Gehäuseelemente denkbar. Insbesondere für Kabelkanäle 10, 10', 10" kann dies den Vorteil haben, dass ein Zugang zu den Kabeln erfolgen kann (beispielsweise im Rahmen von Wartungsarbeiten), ohne hierfür die Befestigungsschrauben der Kabelkanäle und damit die Paneele 2 lösen zu müssen.

Anhand der Figuren 1 und 2 lässt sich auch die Montage der Kabelkanäle 10, 10', 10", des T-Stücks 20 und des ersten Gehäusekastens 30 gemäß eines erfindungsgemäßen Verfahren beschreiben. Eine solche Vorgehensweise kann beispielsweise im Zuge einer Umrüstung eines Passagierraums in den Frachtladeraum 1 vorteilhaft sein.

In diesem Ausführungsbeispiel kommen vorkonfektionierte Kabelkanäle 10, 10', 10" zum Einsatz, bei denen der Gehäusebohrabstand dG mit dem Verkleidungsbohrabstand dV übereinstimmt. Darüber hinaus sind Kabel in den Hohlräumen der Kabelkanäle 10, 10', 10" vorverlegt und mit Steckverbindungen ausgestattet.

In einem ersten Schritt werden ausgewählte Befestigungsschrauben entfernt, mit denen die Paneele 2 an den Spanten 3 verschraubt sind. Hierdurch werden nicht nur die Verkleidungsbohrungen 4 der Paneele 2, sondern auch die Befestigungsaufnahmen 5 der Spanten 3 freigelegt.

Es folgt die Montage der Kabelkanäle 10, 10', 10" und des ersten Gehäusekastens 30 an den Paneelen 2. Hierzu werden die Gehäusebohrungen 11 an den jeweiligen Verkleidungsbohrungen 4 der Paneele 2 ausgerichtet. Anschließend werden geeignete Schrauben in die Befestigungsaufnahmen 5 eingebracht, wobei die Schrauben sowohl die Gehäusebohrungen 11 als auch die Verkleidungsbohrungen 4 durchdringen.

Sind die Kabelkanäle 10, 10', 10" und der erste Gehäusekasten 30 auf diese Weise angebracht, können die Kabel über die Steckverbindungen miteinander verbunden werden. Zuletzt erfolgt die Montage des T-Stücks 20, sodass es die in den Kabelkanälen 10, 10', 10" verlaufenden Kabel vollständig verdeckt.

Durch die Nutzung der bestehenden Verkleidungsbohrungen 4 auf den Paneelen 2 können somit die Kabelkanäle 10, 10', 10" sowie das T-Stück 20 und der erste Gehäusekasten 30 montiert werden, ohne die Oberfläche der Paneele 2 zu beschädigen. Da die Paneele 2 durchbrandsicher und die Gehäuseelemente bevorzugt aus schwer entflammbarem Material, insbesondere Polyamid 12, hergestellt sind, fungieren die Paneele 2 mit den darauf montierten Gehäuseelementen weiterhin als intakte Durchbrandbarriere im Flugzeug. Darüber hinaus sorgen die Paneele 2 dafür, dass der Mindestabstand zwischen Kabeln, die in den Kabelkanälen 10, 10', 10" verlaufen, zu weiteren Kabelsystemen, die hinter den Paneelen 2 verlaufen, auf einfache Weise eingehalten bzw. ausgebaut wird.

Den bisher beschriebenen Ausführungsbeispielen ist gemeinsam, dass die verwendeten Gehäuseelemente ausschließlich Kabel und/oder elektronische Komponenten beherbergen. Die Befestigung auf Verkleidungselementen unter Ausnutzung von bestehenden Befestigungsvorrichtungen, einer der Grundgedanken dieser Erfindung, ist aber grundsätzlich für Gegenstände und Vorrichtungen beliebiger Art möglich. Dies scheint besonders für Vorrichtungen sinnvoll, für die ein einfacher Zugriff im Frachtladeraum möglich sein soll. Durch die erfindungsgemäße Montageart ergeben sich ähnliche Vorteile wie in den oben beschriebenen Ausführungsbeispielen.

### Bezugszeichenliste

- 1: Frachtladeraum
- 2: Paneel
- 3: Spanten
- 4: Verkleidungsbohrung
- 5: Befestigungsaufnahme
- 6: Frachtraumboden

- 10,10',10": Kabelkanal
- 11: Gehäusebohrung
- 12: Mittelsteg
- 13: erster Innenkanal
- 13': zweiter Innenkanal

- 20: T-Stück
- 21: Verbindungselement (zur Verbindung zweier Kabelkanäle)
- 22: Führungsring

- 30,30': Gehäusekasten
- 31: Schaltwippe
- 32: Befestigungsplatte
- 33: Gehäuserahmen

- dB: Befestigungsaufnahmebohrabstand
- dG: Gehäusebohrabstand
- dV: Verkleidungsbohrabstand

## Patentansprüche

1. Frachtladeraum eines Flugzeugs, umfassend:
- Verkleidungselemente (2), die an Trägern, insbesondere Strukturelementen (3), des Flugzeugs befestigt sind, wobei die Verkleidungselemente (2) zur Befestigung eine Vielzahl von Verkleidungsbohrungen (4) mit vordefinierten Verkleidungsbohrabständen (dV) aufweisen, und
- mindestens ein Gehäuseelement (10,20,30) zur Beherbergung von Elektronikkomponenten und/oder Kabeln,
**dadurch gekennzeichnet, dass**
das Gehäuseelement (10,20,30) mindestens ein Paar von Gehäusebohrungen (11) zur Aufnahme von Befestigungsvorrichtungen aufweist, wobei die Gehäusebohrungen (11) einen zu mindestens einem Paar von Verkleidungsbohrabständen (dV) korrespondierenden Gehäusebohrabstand (dG) haben.

2. Frachtladeraum nach Anspruch 1,
**dadurch gekennzeichnet, dass**
das mindestens eine Gehäuseelement (10,20,30) auf einem der Verkleidungselemente (2) montiert ist.

3. Frachtladeraum nach einem der vorhergehenden Ansprüche,
**dadurch gekennzeichnet, dass**
mindestens eines der Gehäuseelemente wahlweise als
- Kabelkanal (10) zur Führung eines Kabels,
- Verbindungselement (20) zur Verbindung mehrerer Kabelkanäle, oder
- Gehäusekasten (30) für eine elektrische Komponente, insbesondere Schalter, beispielsweise eine Schaltwippe (31), und/oder Anzeigeeinrichtung,
ausgebildet ist.

4. Frachtladeraum nach einem der vorhergehenden Ansprüche, insbesondere nach Anspruch 3,
**gekennzeichnet durch**:
mindestens ein Gehäuseelement in Form eines Kabelkanals (10), der
- einen symmetrischen Querschnitt, insbesondere halbellipsenförmig, aufweist, und/oder
- mindestens ein Mittelstegsegment (12) aufweist, das so angeordnet ist, dass das Mittelstegsegment (12) einen Innenbereich des Kabelkanals (10) in Längsrichtung in mindestens zwei Innenkanäle (13,13') teilt.

5. Frachtladeraum nach einem der vorhergehenden Ansprüche, insbesondere nach Anspruch 3 oder 4,
**gekennzeichnet durch**:
- mindestens ein Frachtladesystem mit mindestens einem Kabel und
- mindestens ein Gehäuseelement in Form eines Kabelkanals (10),
wobei der Kabelkanal (10) mindestens ein Kabel des Frachtladesystems beherbergt.

6. Frachtladeraum nach einem der vorhergehenden Ansprüche, insbesondere nach Anspruch 3,
**dadurch gekennzeichnet, dass**
mindestens ein Gehäuseelement in Form eines Verbindungselements (20,21) zur Verbindung von zwei oder drei oder vier Kabelkanälen ausgebildet ist und/oder ein Führungselement, insbesondere einen Führungsring (22), aufweist.

7. Frachtladeraum nach einem der vorhergehenden Ansprüche,
**dadurch gekennzeichnet, dass**
mindestens ein Gehäuseelement (10,20,30) aus einem vorzugsweise schwer entflammbaren Material, insbesondere Polyamid 12, gefertigt ist.

8. Frachtladeraum nach einem der vorhergehenden Ansprüche,
**dadurch gekennzeichnet, dass**
mindestens eines der Gehäuseelemente (10,20,30) in einem Spritzgussverfahren gefertigt ist, und/oder
zur Montage am oder auf einem Boden des Frachtdecks aus einer Metalllegierung, insbesondere einer Aluminiumlegierung, ausgebildet ist.

9. Flugzeug mit einem Frachtladeraum nach einem der Ansprüche 1 bis 8.

10. Verfahren zur Montage von Gehäuseelementen (10,20,30) in einem Frachtladeraum eines Flugzeugs, vorzugsweise im Zuge einer Umrüstung eines Passagierraums in den Frachtladeraum, insbesondere nach einem der Ansprüche 1 bis 8,
**gekennzeichnet durch**
die folgenden Schritte:
- Entfernen von Befestigungsvorrichtungen, mit denen Verkleidungselemente (2) auf Strukturelementen (3) fixiert sind, aus Befestigungsaufnahmen (5) der Strukturelemente (3);
- Montage der Gehäuseelemente (10,20,30) mit vorkonfektionierten Gehäusebohrungen (11) auf den Verkleidungselementen (2) unter Ausnutzung der Befestigungsaufnahmen (5),
wobei Befestigungsvorrichtungen in die Gehäusebohrungen (11) eingebracht und in den Befestigungsaufnahmen (5) befestigt werden, und
- Anordnen von Kabeln, vorzugsweise mit Steckverbindungen ausgestattet, in Hohlräumen von mindestens einigen Gehäuseelementen (10,20,30).

11. Verfahren nach Anspruch 10,
umfassend den Schritt:
- Fertigen mindestens eines Gehäuseelements (10,20,30) mit Gehäusebohrungen (11), das einen Gehäusebohrabstand (dG) hat, der im Wesentlichen einem Befestigungsaufnahmebohrabstand (dB) entspricht.

12. Verfahren nach Anspruch 11,
**dadurch gekennzeichnet, dass**
der Schritt des Fertigens umfasst:
- ein Strangpressen; und/oder
- ein Spritzgießen, insbesondere eines Polyamids 12; und/oder
- einen 3D-Druck; und/oder
- ein Formlaminieren eines glasfaserverstärkten Kunststoffs, insbesondere eines Glasfaser-Epoxidharzes.

## Claims

1. Cargo hold of an aircraft, comprising:
- cladding elements (2) which are attached to supports, in particular structural elements (3), of the aircraft, wherein the cladding elements (2) have a plurality of cladding holes (4) with predefined cladding hole spacings (dV) for attachment, and
- at least one housing element (10,20,30) for accommodating electronic components and/or cables,
**characterized in that**
the housing element (10, 20, 30) has at least one pair of housing holes (11) for receiving fastening devices, wherein the housing holes (11) have a housing hole spacing (dG) corresponding to at least one pair of cladding hole spacings (dV).

2. Cargo hold according to claim 1,
**characterized in that**
the at least one housing element (10, 20, 30) is mounted on one of the cladding elements (2).

3. Cargo hold according to one of the preceding claims,
**characterized in that**
at least one of the housing elements is optionally designed as
- a cable duct (10) for guiding a cable,
- a connecting element (20) for connecting a plurality of cable ducts, or
- a housing box (30) for an electrical component, in particular a switch, for example a switching rocker (31), and/or display device.

4. Cargo hold according to one of the preceding claims, in particular according to claim 3,
**characterized by**:
at least one housing element in the form of a cable duct (10), which has
- a symmetrical cross-section, in particular semi-elliptical, and/or
- at least one central web segment (12), which is arranged such that the central web segment (12) divides an inner region of the cable duct (10) in the longitudinal direction into at least two inner ducts (13, 13').

5. Cargo hold according to one of the preceding claims, in particular according to claim 3 or 4,
**characterized by**:
- at least one cargo loading system having at least one cable, and
- at least one housing element in the form of a cable duct (10),
wherein the cable duct (10) accommodates at least one cable of the cargo loading system.

6. Cargo hold according to one of the preceding claims, in particular according to claim 3,
**characterized in that**
at least one housing element is in the form of a connecting element (20, 21) for connecting two or three or four cable ducts and/or has a guide element, in particular a guide ring (22).

7. Cargo hold according to one of the preceding claims,
**characterized in that**
at least one housing element (10, 20, 30) is made of a preferably flame-retardant material, in particular polyamide 12.

8. Cargo hold according to one of the preceding claims,
**characterized in that**
at least one of the housing elements (10, 20, 30) is manufactured in an injection molding process, and/or
is formed of a metal alloy, in particular an aluminum alloy, for mounting at or on a floor of the cargo deck.

9. Aircraft having a cargo hold according to one of claims 1 to 8.

10. Method for mounting housing elements (10,20,30) in a cargo hold of an aircraft, preferably in the course of a conversion of a passenger compartment into the cargo hold, in particular according to one of claims 1 to 8,
**characterized by**
the following steps:
- removing fastening devices, with which cladding elements (2) are fixed on structural elements (3), from fastening receptacles (5) of the structural elements (3);
- mounting the housing elements (10, 20, 30) with prefabricated housing holes (11) on the cladding elements (2) using the fastening receptacles (5),
wherein fastening devices are introduced into the housing holes (11) and fastened in the fastening receptacles (5), and
- arranging cables, preferably equipped with plug-in connections, in cavities of at least some housing elements (10, 20, 30).

11. Method according to claim 10,
comprising the step of:
- fabricating at least one housing element (10, 20, 30) having housing holes (11) and having a housing hole spacing (dG) substantially equal to a fastening receptacle hole spacing (dB).

12. Method according to claim 11,
**characterized in that**
the step of fabricating comprises:
- an extrusion; and/or
- an injection molding, in particular of a polyamide 12; and/or
- a 3D printing; and/or
- a mold lamination of a glass fiber reinforced plastic, in particular a glass fiber epoxy resin.

## Revendications

1. Compartiment de chargement de fret d'un aéronef, comprenant:
- des éléments de revêtement (2) fixés à des supports, en particulier des éléments de structure (3), de l'aéronef, les éléments de revêtement (2) présentant, pour leur fixation, une pluralité d'alésages de revêtement (4) avec des distances d'alésage de revêtement prédéfinies (dV), et
- au moins un élément de logement (10,20,30) pour l'hébergement de composants électroniques et/ou de câbles,
**caractérisé en ce que**
l'élément de logement (10, 20, 30) présente au moins une paire d'alésages de logement (11) destinés à recevoir des dispositifs de fixation, les alésages de logement (11) présentant une distance d'alésage de logement (dG) correspondant à au moins une paire de distances d'alésage de revêtement (dV).

2. Compartiment de chargement de fret selon la revendication 1,
**caractérisé en ce que**
l'au moins un élément de logement (10, 20, 30) est monté sur l'un des éléments de revêtement (2).

3. Compartiment de chargement de fret selon l'une des revendications précédentes, **caractérisé en ce que**
au moins un des éléments de logement est réalisé en tant que
- canal de câble (10) pour le guidage d'un câble,
- élément de liaison (20) pour relier plusieurs canaux de câbles, ou
- boîtier (30) pour un composant électrique, en particulier un interrupteur, par exemple un sélecteur (31), et/ou un dispositif d'affichage.

4. Compartiment de chargement de fret selon l'une des revendications précédentes, en particulier selon la revendication 3,
**caractérisé par**:
au moins un élément de logement sous forme d'un canal de câble (10) qui
- présente une section symétrique, notamment semi-elliptique, et/ou
- présente au moins un segment de traverse centrale (12) qui est disposé de telle sorte que le segment de traverse centrale (12) divise une zone intérieure du canal de câble (10) dans la direction longitudinale en au moins deux canaux intérieurs (13, 13').

5. Compartiment de chargement de fret selon l'une des revendications précédentes, en particulier selon la revendication 3 ou 4,
**caractérisé par**:
- au moins un système de chargement de fret comportant au moins un câble, et
- au moins un élément de logement sous la forme d'un canal de câble (10), le canal de câble (10) hébergeant au moins un câble du système de chargement de fret.

6. Compartiment de chargement de fret selon l'une des revendications précédentes, en particulier selon la revendication 3,
**caractérisé en ce que**
au moins un élément de logement se présente sous la forme d'un élément de liaison (20, 21) pour relier deux ou trois ou quatre canaux de câbles et/ou présente un élément de guidage, en particulier une bague de guidage (22).

7. Compartiment de chargement de fret selon l'une des revendications précédentes, **caractérisé en ce que**
au moins un élément de logement (10, 20, 30) est fabriqué en un matériau de préférence difficilement inflammable, en particulier en polyamide 12.

8. Compartiment de chargement de fret selon l'une des revendications précédentes, **caractérisé en ce que**
au moins l'un des éléments de logement (10, 20, 30) est fabriqué selon un procédé de moulage par injection et/ou est réalisé en un alliage métallique, en particulier un alliage d'aluminium, pour être monté au niveau de ou sur un sol du pont de chargement.

9. Aéronef comportant un compartiment de chargement de fret selon l'une des revendications 1 à 8.

10. Procédé de montage d'éléments de logement (10, 20, 30) dans un compartiment de chargement de fret d'un aéronef, de préférence dans le cadre d'une transformation d'un compartiment de passagers en compartiment de chargement de fret, en particulier selon l'une des revendications 1 à 8,
**caractérisé par**
les étapes suivantes:
- retrait des dispositifs de fixation, au moyen desquels des éléments de revêtement (2) sont fixés sur des éléments de structure (3), des logements de fixation (5) des éléments de structure (3);
- montage des éléments de logement (10, 20, 30) avec des alésages de logement (11) préconfectionnés sur les éléments de revêtement (2), en utilisant les logements de fixation (5), des dispositifs de fixation étant introduits dans les alésages de logement (11) et fixés dans les logements de fixation (5), et
- disposition de câbles, de préférence équipés de connecteurs, dans des cavités d'au moins certains éléments de logement (10, 20, 30).

11. Procédé selon la revendication 10,
comprenant l'étape suivante:
- fabrication d'au moins un élément de logement (10, 20, 30) avec des alésages de logement (11) qui ont une distance d'alésage de logement (dG) qui correspond sensiblement à une distance d'alésage de logement de fixation (dB).

12. Procédé selon la revendication 11,
**caractérisé en ce que**
l'étape de fabrication comprend:
- une extrusion; et/ou
- un moulage par injection, en particulier un polyamide 12; et/ou
- une impression 3D; et/ou
- un laminage par moulage d'une matière plastique renforcée de fibres de verre, en particulier d'une résine époxy à fibres de verre.
